# EUROPÄISCHE PATENTANMELDUNG

(11) **EP 4 513 282 A1**
(43) Veröffentlichungstag der Anmeldung: **26.02.2025**
(21) Anmeldenummer: 23193549.5
(22) Anmeldetag: 25.08.2023
(51) Int. Cl.: G05B 19/04, G06F 21/00

(54) **VERFAHREN ZUM BETREIBEN EINES TECHNISCHEN SYSTEMS MITTELS EINES AUTOMATISIERUNGSSYSTEMS, COMPUTERPROGRAMMPRODUKT, COMPUTERLESBARES SPEICHERMEDIUM SOWIE AUTOMATISIERUNGSSYSTEM**

(71) Anmelder: Siemens Aktiengesellschaft, 80333 München (DE)
(72) Erfinder: Falk, Rainer, 85435 Erding (DE); Feist, Christian Peter, 80689 München (DE); Hornung, Peter, 91054 Erlangen (DE); Kumari, Ankita, 81549 München (DE); Mantel, Martin, 91325 Adelsdorf (DE); Piccoli, Alessandro, 80333 München (DE); Pyka, Stefan, 85570 Markt Schwaben (DE); Sperl, Franz, 92526 Oberviechtach (DE); Zeschg, Thomas, 81543 München (DE)
(74) Vertreter: Siemens Patent Attorneys

(57) **Zusammenfassung**

Die Erfindung betrifft ein Verfahren zum Betreiben eines technischen Systems (129 mittels eines Automatisierungssystem (10), mit den Schritten:
- Identifizieren einer Gerätekonfiguration (44) des technischen Systems (12) mittels einer elektronischen Recheneinrichtung (14) des Automatisierungssystems (10);
- Erzeugen einer Geräteattestierung (46) in Abhängigkeit von der identifizierten Gerätekonfiguration (44) mittels der elektronischen Recheneinrichtung (14);
- Übermitteln der Geräteattestierung (46) an eine Projektierungseinrichtung (16) des Automatisierungssystems (10) zum Projektieren eines Projekts für das technische System (12) mittels der elektronischen Recheneinrichtung (14);
- Überprüfen der Geräteattestierung (46) in Abhängigkeit von dem durchzuführenden Projekt mittels der Projektierungseinrichtung (16); und
- Übermitteln von Projektierungsdaten (48) für das Projekt an die elektronische Recheneinrichtung (14) in Abhängigkeit von der Überprüfung mittels der Projektierungseinrichtung (16). Die Erfindung betrifft ein Computerprogrammprodukt, ein computerlesbares Speichermedium sowie ein Automatisierungssystem 10.

## Beschreibung

Die Erfindung betrifft ein Verfahren zum Betreiben eines technischen Systems mittels eines Automatisierungssystems. Ferner betrifft die Erfindung ein Computerprogrammprodukt, ein computerlesbares Speichermedium sowie ein Automatisierungssystem.

Ein Gerät, zum Beispiel ein Steuergerät, ein Internet of Things (IoT) Gerät oder eine speicherprogrammierbare Steuerung PLC, kann sich kryptographisch gegenüber Kommunikationspartnern mittels eines Gerätezertifikates authentisieren. Das Gerätezertifikat umfasst neben dem öffentlichen Geräteschlüssel auch Informationen über das Steuergerät selbst, zum Beispiel Hersteller, Modell, Version sowie Seriennummer. Diese im Gerätezertifikat enthaltene Information beschreibt somit unveränderliche Eigenschaften des Steuergeräts.

Gerade bei einer flexiblen Produktion (Industrie 4.0, Plug-and-Produce) wird eine Produktionsumgebung jedoch regelmäßig rekonfiguriert. Dabei können auch Änderungen bzgl. der mit dem Gerät verbundenen Hardware-Komponenten, wie Sensoren, Aktoren, I/O-Module (Input/Output), Erweiterungsmodule, Technologiemodule erfolgen. Eine herkömmliche Gerät-Authentisierung ist dabei nicht hinreichend aussagekräftig, da die Authentisierung lediglich die festen, unveränderlichen Aspekte des authentisierenden Geräts selbst verlässlich bestätigt.

Es besteht daher Bedarf an einer verbesserten Geräteauthentisierung, insbesondere für Geräte, die eine flexible Änderung der Hardware-Konfiguration unterstützen.

Aufgabe der vorliegenden Erfindung ist es, ein Verfahren, ein Computerprogrammprodukt, ein computerlesbares Speichermedium sowie ein Automatisierungssystem zu schaffen, mittels welchen eine verbesserte Geräteauthentisierung realisiert werden kann.

Diese Aufgabe wird durch ein Verfahren, ein Computerprogrammprodukt, ein computerlesbares Speichermedium, sowie ein Automatisierungssystem, gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines technischen Systems mittels eines Automatisierungssystems. Es wird eine Gerätekonfiguration des technischen Systems mittels einer elektronischen Recheneinrichtung des Automatisierungssystems identifiziert. Es wird eine Geräteattestierung mittels der elektronischen Recheneinrichtung in Abhängigkeit von der identifizierten Gerätekonfiguration erzeugt. Es erfolgt das Bereitstellen der Geräteattestierung an eine Projektierungseinrichtung des Automatisierungssystems zum Projektieren eines Projekts für das technische System mittels der elektronischen Recheneinrichtung. Die Geräteattestierung wird in Abhängigkeit von dem durchzuführenden Projekt mittels der Projektierungseinrichtung überprüft und erfolgt das Übermitteln von Projektierungsdaten für das Projekt an die elektronische Recheneinrichtung in Abhängigkeit von der Überprüfung mittels der Projektierungseinrichtung.

Somit ist es ermöglicht, dass auch beispielsweise bei der sogenannten Industrie 4.0 entsprechende Gerätekonfigurationen attestiert werden können, wodurch auch sich verändernde Hardware am technischen System entsprechend attestiert werden kann und eine entsprechende Projektierung durchgeführt werden kann. Insbesondere ist somit vorgesehen, dass die elektronische Recheneinrichtung, beispielsweise in Form eines IoT-Geräts (Internet of Things), einer speicherprogrammierbaren Steuerung (PLC) oder eines IPC (Industrie Personal Computer) mit lokaler oder Remote I/O-Schnittstelle (Input/Output) mit änderbarer Hardware-Konfiguration bereitgestellt wird. Das Steuergerät bzw. die elektronische Recheneinrichtung ermittelt dabei die entsprechende Gerätekonfiguration, welche auch als Hardware-Konfiguration bezeichnet wird, das heißt welche Hardware-Komponenten/Gerätekomponenten mit der elektronischen Recheneinrichtung verbunden sind, und bestätigt diese in Form einer insbesondere kryptographisch geschützten Attestierung. Bei den Hardware-Komponenten können es sich zum Beispiel um Sensoren oder Aktuatoren handeln, die über eine lokale I/O-Schnittstelle der elektronischen Recheneinrichtung oder über eine Remote-I/O-Schnittstelle, insbesondere als sogenannte dezentrale Peripherie, mit der elektronischen Recheneinrichtung verbunden sind, um eingesteckte oder angesteckte Erweiterungsmodule, Technologiemodule oder Konfigurationsmodule (Konfiguration Plug, SD-Card) zu erkennen. Die elektronische Recheneinrichtung bildet eine kryptographische Datenstruktur, die die ermittelte Gerätekonfiguration beschreibt und stellt diese über eine Kommunikationsschnittstelle, zum Beispiel OPC UA oder HTTP, bereit. Diese Datenstruktur/Geräteattestierung kann auch als sogenannte "Hardware Configuration Attestation" bezeichnet werden. In einer Variante kann diese zusätzlich auch eine Information zu den fest in dem Steuergerät verbauten Komponenten umfassen.

Die entsprechende Hardware Configuration Attestation wird an die Projektierungseinrichtung, welche auch als Projektierungsdaten-System bezeichnet werden kann, oder auch als Gerätemanagementsystem bezeichnet werden kann, übermittelt und geprüft. Eine Projektierung, d.h. die Projektierungsdaten, wird auf die elektronische Recheneinrichtung nur dann geladen, wenn die Projektierungseinrichtung mit der durch die Hardware Configuration Attestation bestätigte Gerätekonfiguration kompatibel ist. Dies kann zum Beispiel dadurch erfolgen, dass die Übereinstimmung der Einträge der Hardware Configuration Attestation mit einer der Projektierung zugeordneten Referenz-Hardware-Konfiguration überprüft wird.

Insbesondere kann somit zuverlässig und manipulationsgeschützt vermieden werden, dass eine Projektierung, die mit der aktuellen Gerätekonfiguration der elektronischen Recheneinrichtung nicht kompatibel ist, versehentlich auf diese geladen und ausgeführt wird. Eine Projektierung wird somit nur auf die elektronische Recheneinrichtung geladen, wenn diese die erwartete Hardware-Komponenten tatsächlich aufweist. Dadurch wird vermieden, dass die elektronische Recheneinrichtung nach Erkennen der Inkompatibilität in einen Stopp-Betriebsmodus wechselt. Dies ist insbesondere vorteilhaft, wenn bei einer flexiblen Produktion, bspw. Industrie 4.0, Plug-and-Produce, regelmäßig Änderungen an der Hardware-Konfiguration von Produktionssystemen vorgenommen werden. Es werden Verzögerungen und Produktionsausfälle vermieden, wenn Steuergeräte in einen Fehlermodus bzw. Stopp-Modus wechseln, die ein manuelles Eingreifen erfordern.

Weiterhin kann damit verhindert werden, dass eine Projektierung zum Zweck eines Reverse Engineerings auf ein Test-Steuergerät geladen wird, das nicht mit der erwarteten Gerätekonfiguration verbunden ist. Die Erfindung ist mit insbesondere herkömmlichen Hardware-basierten PLCs ebenso anwendbar wie mit virtualisierten PLCs, zum Beispiel als native Applikation, Container oder Virtual Machine realisiertes Steuergerät/PLC, die auf einer Open Computer Plattform, wie zum Beispiel einem IPC oder einem Edge-Server, ausgeführt werden.

Eine Projektierung legt die Steuerungsfunktionalität des Geräts fest beziehungsweise passt eine vorbereitete Steuerungsfunktionalität an. Eine Projektierung, d.h. die auf ein Gerät ladbaren Projektierungsdaten, können beispielsweise Regelparameter für einen PID-Regler, Werte für Schaltschwellen oder einen Kontaktplan oder einen Funktionsplan oder eine Anweisungsliste für eine speicherprogrammierbare Steuerung umfassen.

Dabei kann ferner insbesondere vorgesehen sein, dass die elektronische Recheneinrichtung bspw. an dem technischen System angeordnet bzw. ausgebildet ist, und dabei entsprechende Verbindungen, ob kabellos oder kabelgebunden, mit dem technischen System aufweist. Zwischen der Projektierungseinrichtung, welche bspw. serverbasiert ausgebildet sein kann, kann dann eine drahtlose bzw. auch drahtgebundene Kommunikation stattfinden. Die Projektierungseinrichtung ist dabei jedoch insbesondere unabhängig vom technischen System und von der elektronischen Recheneinrichtung ausgebildet.

Gemäß einer vorteilhaften Ausgestaltungsform werden in Abhängigkeit von der Geräteattestierung potentiell durchzuführende Projekte ermittelt und die potentiell durchzuführenden Projekte zur Auswahl durch eine Person bereitgestellt. Bspw. kann die Projektierungseinrichtung zuerst eine Liste von potentiellen Projektierungen ermitteln, die bei der durch die Geräteattestierung bestätigten Gerätekonfiguration zulässig sind. Diese Liste von zulässigen Projektierungen kann dann zur Auswahl aller dieser zulässigen Projektierungen zum Übertragen an die elektronische Recheneinrichtung ausgewählt werden. Entsprechend kann einem Anwender angezeigt werden, welche Projektierungen nicht zulässig sind bzw. welche Projektierungen eben zulässig sind.

Weiterhin vorteilhaft ist, wenn nach dem Übermitteln der Projektierungsdaten an die elektronische Recheneinrichtung eine Änderung der Gerätekonfiguration am technischen System gesperrt wird. Insbesondere ist es somit möglich, dass die durch bspw. die sogenannte Hardware Configuration Attestation bestätigte Gerätekonfiguration an der elektronischen Recheneinrichtung versiegelt wird, das heißt temporär, beispielsweise bis zum Aufheben/Widerrufen der Versiegelung, und somit Änderungen der Hardware-Konfiguration gesperrt werden. Das Sperren kann durch bspw. einen logischen oder einem mechanischen Schutz erfolgen. Somit ist es ermöglicht, dass die aktuelle Gerätekonfiguration geschützt vor weiterer Manipulation ist und bspw. eine Änderung der Gerätekonfiguration nicht mehr vorgenommen werden kann.

Es hat sich weiter als vorteilhaft erwiesen, wenn bei einer Änderung der Gerätekonfiguration eine Warnmeldung erzeugt wird. Insbesondere kann somit bei einer Änderung der Gerätekonfiguration für einen Anwender eine Warnung erzeugt werden, dass die ursprünglich attestierte Gerätekonfiguration nicht mehr mit der tatsächlichen Gerätekonfiguration übereinstimmt. Somit kann verhindert werden, dass bspw. das technische System in einen Stopp-Modus geht. Somit kann zuverlässig eine Durchführung des Projektes realisiert werden.

Weiterhin vorteilhaft ist, wenn mittels der elektronischen Recheneinrichtung während des Betriebs des technischen Systems die Gerätekonfiguration überwacht wird. Hierbei kann insbesondere vorgesehen sein, dass die elektronische Recheneinrichtung bei geladener/aktiver Projektierung das technische System überwacht, sodass die attestierte Gerätekonfiguration weiterhin unverändert vorliegt. Dies kann insbesondere automatisiert oder auch auf Anweisung eines Projektierungsdaten-Systems, insbesondere der Projektierungseinrichtung, erfolgen. Somit kann auch während des Betriebs zuverlässig erkannt werden, wenn unzulässigerweise eine Änderung an der Gerätekonfiguration durchgeführt wird.

Eine weitere vorteilhafte Ausgestaltungsform sieht vor, dass mittels der elektronischen Recheneinrichtung eine mechanische Verbindung am technischen System verriegelt und/oder blockiert wird. Insbesondere kann bspw. die elektronische Recheneinrichtung eine mechanische Verbindung, bspw. Stecker oder Buchsen, entsprechend verriegeln, über die eine wechselbare Hardware-Komponente oder eine Verkabelung zu dieser verbunden ist. Dadurch ist eine Änderung der Hardware-Konfiguration verhindert oder zumindest erschwert. Ferner kann die elektronische Recheneinrichtung auch eine Abdeccklappe bzw. Wartungsklappe oder ähnliches, die einen physischen Zugriff auf entsprechende Hardware-Komponentenschnittstellen hat, verhindern bzw. verriegeln. Des Weiteren kann die elektronische Recheneinrichtung und/oder auch die Projektierungseinrichtung einen entsprechenden Schaltschrank verriegeln oder auch ein Rack, in dem die elektronische Recheneinrichtung installiert ist, um einen physischen Zugriff auf die entsprechende Hardware-Komponente der elektronischen Recheneinrichtung zu verhindern. Somit kann manipulationsgesichert das technische System betrieben werden. In einer weiteren Variante kann Hardware Configuration Attestation eine Information umfassen, die angibt, ob eine mechanische Schutzvorrichtung, z.B. ein Schloss oder eine manuell schließbare Schutzklappe, verriegelt ist.

Ferner hat sich als vorteilhaft erwiesen, wenn die Geräteattestierung kryptographisch geschützt erzeugt wird. Somit kann die entsprechende Geräteattestierung zuverlässig an die Projektierungseinrichtung übermittelt werden, und somit manipulationsgesichert eine Projektierung am technischen System realisiert werden.

Es hat sich weiterhin als vorteilhaft erwiesen, wenn eine Gerätekomponente am technischen System auf Basis eines gerätespezifischen Identifizierers der Gerätekomponente identifiziert wird. Bei dem gerätespezifischen Identifizierer kann es sich bspw. um eine Seriennummer bzw. einen Identifier handeln. Vorzugsweise kann ferner die entsprechende Gerätekomponente kryptographisch authentisiert werden, wie zum Beispiel von USB oder PCI bekannt. Somit kann zuverlässig die Gerätekonfiguration und dadurch die Geräteattestierung bestimmt und erzeugt werden.

Ferner hat es sich als vorteilhaft erwiesen, wenn Gerätekomponente auf Basis eines gerätekomponentenspezifischen Parameters der Gerätekomponente identifiziert wird. Insbesondere handelt es sich somit bei dem gerätekomponentenspezifischen Parameter um eine sogenannte "weiche" Eigenschaft, insbesondere um einen Komponenten-Fingerprint. Beispielsweise kann anhand von elektrischen Parametern, die Produktionsschwankungen erliegen das Gerät identifiziert werden. Beispiele sind Innenwiderstand, Impedanz, Streuparameter eines analog verbundenen Aktors oder Sensors oder einer über eine digitale Kommunikationsschnittstelle, wie zum Beispiel ITC oder SPI oder USB-angebundene Komponenten oder ein zeitlich aufgelöstes Antwortsignal auf ein Prüf-Pulssignal, wie zum Beispiel von Time-domain Reflektometern bekannt oder einem Frequenzspektrumsignal, das ähnlich, wie beim Ausmessen, eines elektrischen Filters durch ein Spektrumanalyzer bei Anregung durch ein Rauschsignal ermittelt wird oder durch Auslesen von auf den verbundenen und hinterlegten Kalibrierdaten. Insbesondere ist ferner vorzugsweise in der ausgewählten Geräteattestierung eine Information enthalten, auf welche Art die jeweilige Gerätekomponente identifiziert bzw. authentisiert wurde.

Weiterhin vorteilhaft ist, wenn die Projektierungsdaten nur dann an die elektronische Recheneinrichtung übertragen werden, wenn das Projekt mit der Gerätekonfiguration kompatibel ist. Dies hat insbesondere den Vorteil, dass bspw. keine Projektierungsdaten an die elektronische Recheneinrichtung übertragen werden, sollte das Projekt nicht mit der aktuellen Gerätekonfiguration kompatibel sein. Somit kann verhindert werden, dass beispielsweise das technische System gestartet wird, ohne dass tatsächlich das Projekt durchführbar ist. Somit können entsprechende Stopp-Zeiten verhindert werden. Damit kann zuverlässig das Projekt durchgeführt werden.

Ebenfalls vorteilhaft ist, wenn zum Überprüfen der Gerätekonfiguration mittels der Projektierungseinrichtung eine Simulation der Gerätekonfiguration in Abhängigkeit von dem durchzuführenden Projekt durchgeführt wird. Insbesondere kann somit basierend auf der entsprechenden Hardware Configuration Attestation eine der bestätigten Hardware-Konfiguration entsprechende Simulation aufgesetzt werden und die Projektierung auf diese Simulationsumgebung probehalber geladen und aktiviert/ausgeführt werden. Weiterhin ist es möglich, dass die Simulationsumgebung eine weitere Hardware Configuration Attestation bildet, sodass die Übereinstimmung der Hardware Configuration Attestation der elektronischen Recheneinrichtung und der Hardware Configuration Attestation der Simulationsumgebung geprüft werden kann. Somit kann zuverlässig überprüft werden, ob die entsprechende Projektierung mit der attestierten Gerätekonfiguration kompatibel ist.

Ferner hat es sich als vorteilhaft erwiesen, wenn mittels der Projektierungseinrichtung zum Überprüfen der Gerätekonfiguration eine Referenz-Gerätekonfiguration mit der Gerätekonfiguration verglichen wird. Hierzu kann beispielweise die Projektierungseinrichtung eine entsprechende Datenbank mit den Referenz-Gerätekonfigurationen aufweisen. Es wird dann die identifizierte Gerätekonfiguration mit der Referenz-Gerätekonfiguration verglichen und bei einer Übereinstimmung kann entsprechend die Übermittlung der Projektierungsdaten durchgeführt werden. Insbesondere wird somit die Projektierung nur dann auf die elektronische Recheneinrichtung geladen, wenn die Projektierung mit der durch die Hardware Configuration Attestation bestätigte Hardware-Konfiguration kompatibel ist. Dies kann zum Beispiel dadurch erfolgen, dass die Übereinstimmung der Einträge der Hardware Configuration Attestation mit einer der Projektierung zugordneten Referenz-Hardware-Konfiguration überprüft wird. Weiterhin ist es möglich, dass die Projektierungseinrichtung überprüft, ob die durch die Hardware Configuration Attestation bestätigte Gerätekonfiguration in einer Positivliste von Referenz-Gerätekonfigurationen enthalten ist.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ebenfalls betrifft die Erfindung daher auch ein computerlesbares Speichermedium mit zumindest einem Computerprogrammprodukt nach dem vorhergehenden Aspekt.

Ein nochmals weiterer Aspekt der Erfindung betrifft ein Automatisierungssystem zum Betreiben eines technischen Systems, mit zumindest einer elektronischen Recheneinrichtung und einer Projektierungseinrichtung, wobei das Automatisierungssystem zum Durchführen eines Verfahrens nach dem vorhergehenden Aspekt ausgebildet ist. Insbesondere wird das Verfahren mittels des Automatisierungssystems durchgeführt.

Vorteilhafte Ausgestaltungsformen des Verfahrens sind als vorteilhafte Ausgestaltungsformen des Computerprogrammprodukts, des computerlesbaren Speichermediums, sowie des Automatisierungssystems anzusehen. Das Automatisierungssystem weist hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

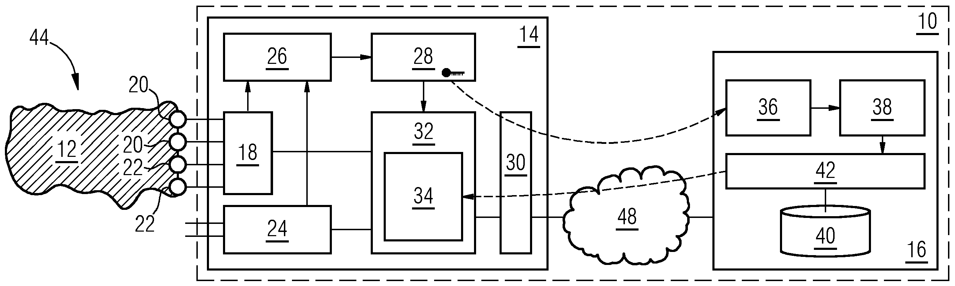

Dabei zeigt die einzige Figur FIG ein schematisches Blockschaltbild gemäß einer Ausführungsform eines Automatisierungssystems mit einem technischen System.

Die Erfindung wird im Folgenden anhand konkreter Ausführungsbeispiele und zugehöriger schematischer Zeichnungen näher erläutert. In der Figur können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Die Figur FIG zeigt ein schematisches Blockschaltbild gemäß einer Ausführungsform eines Automatisierungssystems 10 für ein technisches System 12. Das technische System 12 kann beispielsweise in Form einer Erzeugungsmaschine zum Erzeugen eines Produkts ausgebildet sein. Das Automatisierungssystem 10 weist zumindest eine elektronische Recheneinrichtung 14 als projektierbares Gerät sowie eine Projektierungseinrichtung 16 auf. Die elektronische Recheneinrichtung 14 kann beispielsweise über entsprechende Kommunikationsleitungen, sowohl drahtgebunden als auch drahtungebunden, mit dem technischen System 12 kommunizieren und beispielsweise auch am technischen System 12 verortet sein. Hierzu kann beispielsweise die elektronische Recheneinrichtung 14 ein I/O-Modul (Input/Output Modul) 18 aufweisen. Im folgenden Ausführungsbeispiel weist das technische System 12 beispielsweise 2 Sensoren 20 sowie 2 Aktoren 22 auf. Die Sensoren 20 und die Aktoren 22 sind über das I/O-Modul 18 mit der elektronischen Recheneinrichtung 14 gekoppelt.

Hier und im Folgenden kann ein Modul als Hardwaremodul oder als Softwaremodul verstanden werden. Insbesondere kann ein Modul auch aus einer Hardware und einem auf der Hardware implementierten Softwareteil bestehen.

Ein Softwaremodul kann als ein Teil des Softwarecodes verstanden werden, der funktional zu einer Einheit verbunden und kombiniert ist. Ein Softwaremodul kann mehrere Verarbeitungsschritte und/oder Datenstrukturen umfassen oder implementieren. Ein Verfahrensschritt zur Bereitstellung eines Softwaremoduls kann so verstanden werden, dass er die Bereitstellung eines entsprechenden Softwarecodes in computerlesbarer Form auf einem computerlesbaren Speichermedium umfasst.

Im folgenden Ausführungsbeispiel weist die elektronische Recheneinrichtung 14 ferner ein USB-Modul 14, ein Geräte-Identifizierungsmodul 26, ein Geräteattestierungsmodul 28, ein Kommunikationsmodul 30 sowie ein Prozessorsystem 32 auf. Das Prozessorsystem 32 weist wiederum eine entsprechende Steuerungsfunktion 34 für das technische System 12 auf.

Die Projektierungseinrichtung 16 weist im vorliegenden Ausführungsbeispiel insbesondere ein Attestierungsüberprüfungsmodul 36, ein Autorisierungsüberprüfungsmodul 38, eine Datenbank 40 sowie ein Projektierungsdatenbereitstellungsmodul 42 auf.

Insbesondere zeigt somit die Figur FIG eine Ausführungsform des Verfahrens zum Betreiben des technischen Systems 12 mittels des Automatisierungssystems 10. Es wird eine Gerätekonfiguration 44 des technischen Systems 12 und/oder der elektronischen Recheneinrichtung 14 mittels der elektronischen Recheneinrichtung 14 identifiziert. Es wird eine Geräteattestierung in Abhängigkeit von der identifizierten Gerätekonfiguration 44 mittels der elektronischen Recheneinrichtung 14 bestimmt. Es erfolgt das Übermitteln der Geräteattestierung 46 an die Projektierungseinrichtung 16 zum Projektieren eines Projekts für das technische System 12 mittels der elektronischen Recheneinrichtung 14, d.h. durch Laden einer Projektierung (Projektierungsdaten 48) von der Projektierungseinrichtung 16 auf das Steuergerät (Recheneinrichtung 14). Es wird die Geräteattestierung 46 in Abhängigkeit von dem durchzuführenden Projekt mittels der Projektierungseinrichtung 16 überprüft und es erfolgt das Übermitteln von Projektierungsdaten 48 für das Projekt an die elektronische Recheneinrichtung 14 in Abhängigkeit von der Überprüfung mittels der Projektierungseinrichtung 16.

Dabei ist insbesondere vorgesehen, dass in Abhängigkeit von der Geräteattestierung 46 potentiell durchzuführende Projekte ermittelt werden und die potentiell durchzuführenden Projekte zur Auswahl durch eine Person bereitgestellt werden. Ferner kann nach dem Übermitteln der Projektierungsdaten 48 an die elektronische Recheneinrichtung 14 eine Änderung der Gerätekonfiguration 44 am technischen System 12 gesperrt werden. Des Weiteren kann bei einer Änderung der Gerätekonfiguration 44 eine Warnmeldung erzeugt werden. Ferner kann vorgesehen sein, dass mittels der elektronischen Recheneinrichtung 14 während des Betriebs des technischen Systems 12 die Gerätekonfiguration 44 überwacht wird. Hierzu kann weiterhin vorgesehen sein, dass mittels der elektronischen Recheneinrichtung 14 eine mechanische Verbindung am technischen System 12 und/oder an der elektronischen Recheneinrichtung 14 verriegelt und/oder blockiert wird.

Insbesondere kann ferner vorgesehen sein, dass die Geräteattestierung 46 kryptographisch geschützt erzeugt wird.

Weiterhin kann vorgesehen sein, dass eine Gerätekomponente am technischen System 12 auf Basis eines gerätespezifischen Identifizierers der Gerätekomponente identifiziert wird. Ferner kann eine Gerätekomponente auf Basis eines gerätekomponentenspezifischen Parameters der Gerätekomponente identifiziert werden.

Weiterhin kann vorgesehen sein, dass die Projektierungsdaten 48 nur dann an die elektronische Recheneinrichtung 14 übertragen werden, wenn das Projekt mit der Gerätekonfiguration 44 kompatibel ist.

Weiterhin kann vorgesehen sein, dass mittels der Projektierungseinrichtung 16 zum Überprüfen der Gerätkonfiguration 44 eine Simulation der Gerätekonfiguration 44 in Abhängigkeit von dem durchzuführenden Projekt durchgeführt wird. Alternativ oder ergänzend kann mittels der Projektierungseinrichtung 16 zum Überprüfen der Gerätekonfiguration 44 eine Referenz-Gerätekonfiguration, bspw. auf der Datenbank 40 bereitgestellt, mit der Gerätekonfiguration 44 verglichen werden.

Insbesondere zeigt sich somit die Figur FIG die elektronische Recheneinrichtung 14, bspw. in Form eines IoT-Geräts, eines Steuergeräts, einer speicherprogrammierbaren Steuerung PLC oder einen IPC mit lokaler oder Remote I/O-Schnittstelle mit änderbarer Hardware-Konfiguration.

Die elektronische Recheneinrichtung ermittelt dabei die Gerätekonfiguration 44, das heißt welche Gerätekomponenten mit der elektronischen Recheneinrichtung 14 verbunden sind und bestätigt diese in Form einer kryptographisch geschützten Geräteattestierung 46. Bei den Gerätekomponenten kann es sich zum Beispiel um Sensoren 20 und Aktoren 22 handeln, die über das lokale I/O-Modul 18 oder über eine Remote-I/O-Schnittstelle mit der elektronischen Recheneinrichtung 14 verbunden sind, um eingesteckte oder angesteckte Erweiterungsmodule, Technologiemodule oder Konfigurationsmodule. Die elektronische Recheneinrichtung 14 bildet eine kryptographisch geschützte Datenstruktur, die die ermittelte Gerätekonfiguration 44 beschreibt und stellt diese über das Kommunikationsmodul 30, bspw. OPC UA-Server, bereit. Die Datenstruktur kann auch als "Hardware Configuration Attestation", insbesondere die Geräteattestierung 46, bezeichnet werden. In einer Variante kann diese zusätzlich auch eine Information zu den fest in der elektronischen Recheneinrichtung 14 verbauten Komponenten umfassen.

Eine Gerätekomponente kann vorzugsweise anhand eines Identifizierers identifiziert werden, zum Beispiel eine Seriennummer. Vorzugsweise kann die Gerätekomponente kryptographisch authentisiert werden, zum Beispiel über das USB-Modul 24 oder auch über PCI-Schnittstellen. Es ist auch möglich, die Gerätekomponente anhand "weicher" Eigenschaften, insbesondere im Zuge der Komponente Fingerprint zu identifizieren, zum Beispiel anhand von elektronischen Parametern, die Produktionsschwankungen unterliegen. Dabei ist vorzugsweise in der ausgestellten Geräteattestierung 46 eine Information enthalten, auf welche Art die jeweilige Gerätekomponente identifiziert bzw. authentisiert wurde.

Die Geräteattestierung 46 wird an die Projektierungseinrichtung 16, bspw. in Form eines SAT-Tools (SAT: SIMATIC Automation Tool der Firma Siemens), TIA-Portal (TIA Portal: Totally Integrated Automation Portal der Firma Siemens), Common Device Management-System oder dgl., übermittelt und geprüft. Eine Projektierung wird auf die elektronische Recheneinrichtung 14 nur dann geladen, wenn die Projektierung mit der durch die Geräteattestierung 46 bestätigten Gerätekonfiguration 44 kompatibel ist, und wenn die Geräteattestierung 46, d.h. deren kryptographische Prüfsumme, gültig ist. Dies kann zum Beispiel dadurch erfolgen, dass die Übereinstimmung der Einträge der Geräteattestierung 46 mit einer der Projektierung zugeordnete Referenz-Hardware-Konfiguration überprüft wird. Es ist jedoch auch möglich, dass basierend auf der Geräteattestierung 46 einer bestätigten Hardware-Konfiguration eine entsprechende Simulation aufgesetzt wird und die Projektierung auf diese Simulationsumgebung probehalber geladen und aktiviert/ausgeführt wird. Weiterhin ist es möglich, dass die Simulationsumgebung eine weitere Geräteattestierung 46 bildet, sodass die Übereinstimmung der Geräteattestierung 46 der elektronischen Recheneinrichtung 14 und der Geräteattestierung 46 der Simulationsumgebung geprüft werden kann. In einer Variante wird die eigentliche Geräteattestierung 46 nicht direkt an die Projektierungseinrichtung 16 übermittelt, sondern an die Zertifizierungsstelle (Certification Authority bzw. an deren Registration Authority), die dem Gerät ein Gerätezertifikat bereitstellt, die die durch die Geräteattestierung 46 bestätigte Information umfasst. Die elektronische Recheneinrichtung 14 kann sich dann mit diesem Gerätezertifikat, das die Geräteattestierung 46 umfasst, gegenüber der Projektierungseinrichtung authentisieren und dabei auch die Geräteattestierung 46 über der Projektierungseinrichtung 16 bestätigen.

Die elektronische Recheneinrichtung 14 kann die durch die beim Laden einer Projektierung gebildete Geräteattestierung 46 verwenden, um zu überwachen, dass die Gerätekonfiguration 44 unverändert vorliegt, solange die Projektierung geladen ist oder wenn sie ausgeführt wird, insbesondere im sogenannten Betriebsmodus, das heißt wenn die elektronische Recheneinrichtung 14 die Steuerfunktionalität entsprechend dieser Projektierung aktiviert hat. Bei Abweichung, das heißt bei einer Änderung der Gerätekonfiguration 44, kann ein Fehlerbetriebsmodus aktiviert werden oder es kann eine Warnmeldung bereitgestellt werden.

Weiterhin kann als Ergebnis der Prüfung eine sogenannte Commissioning Data Hardware Configuration Compatibility Attestation gebildet werden, die bestätigt, dass eine bestimmte Projektierung, insbesondere die Projektierungsdaten 48, mit der bestimmten Gerätekonfiguration 44 der elektronischen Recheneinrichtung 14 kompatibel ist. Dies kann zum Beispiel von der Projektierungseinrichtung 16 geprüft werden, bevor eine Projektierung auf die elektronische Recheneinrichtung 14 geladen wird. Dazu kann die Projektierungseinrichtung 16 ein Gerät authentisieren und die Übereinstimmung der authentisierten Geräteidentitäten mit der in der Geräteattestierung 46 enthaltenen oder referenzierten oder bestätigten Geräteidentität prüfen. Ebenso ist es möglich, dass diese von der elektronischen Recheneinrichtung 14 geprüft wird, bevor die zugeordnete Projektierung von der elektronischen Recheneinrichtung 14 akzeptiert oder aktiviert wird. Weiterhin können die elektronische Recheneinrichtung 14 und die Projektierungseinrichtung 16 zum Beispiel grundsätzlich in Form eines Log-Audit-Eintrags festhalten, mit welcher Geräteattestierung 46 eine bestimmte Projektierung geladen oder zusammen aktiviert wurde.

Die Figur FIG zeigt dabei insbesondere die elektronische Recheneinrichtung 14 mit dem Identifizierungsmodul 26 zur Ermittlung der aktuell vorliegenden Gerätekonfiguration 44, das heißt an der I/O-Schnittstelle (I/O-Modul 18) verbundenen Sensoren 20 und Aktoren 22 und der an dem USB-Modul 24 verbundenen USB-Geräte. Die ermittelte Gerätekonfiguration 44 wird an das Geräteattestierungsmodul 28 übermittelt, die die kryptographisch geschützte Geräteattestierung 46 bildet. Die Geräteattestierung 46 wird dann an die Projektierungseinrichtung 16, insbesondere als Commissioning System, übertragen und geprüft durch diese, insbesondere durch das Attestierungsüberprüfungsmodul 36. Weiterhin überprüft die Projektierungseinrichtung 16, ob eine bestimmte Projektierung bei dieser Gerätekonfiguration 44 zulässig ist, insbesondere über das Authentifizierungsüberprüfungsmodul 38. Falls die ausgewählte Projektierung zulässig ist, so wird diese an die elektronische Recheneinrichtung 14 übertragen. Dabei prüft die Projektierungseinrichtung 16 vorzugsweise, ob das sich bei der Übertragung der Projektierung authentisierte Gerät/Gerätekomponente mit dem Gerät übereinstimmt, auf das sich die Geräteattestierung 46 bezieht.

Auch ist es möglich, dass die Projektierungseinrichtung 16 zuerst eine Liste von Projektierungen ermittelt, die bei der durch die Geräteattestierung 46 bestätigte Gerätekonfiguration 44 zulässig sind. Diese Liste von zulässigen Projektierungen kann dann zur Auswahl einer dieser zulässigen Projektierungen zum Übertragen an die elektronische Recheneinrichtung 14 ausgewählt werden. Entsprechend kann einem Anwender angezeigt werden, welche Projektierungen nicht zulässig sind.

Weiterhin ist es möglich, die durch die Geräteattestierung 46 bestätigte Gerätekonfiguration 44 der elektronischen Recheneinrichtung 14 zu versiegeln, das heißt temporär, bspw. bis zum Aufheben/Widerrufen der Versiegelung, und somit Änderungen der Gerätekonfiguration 44 sperren. Das Sperren kann durch einen logischen oder einen mechanischen Schutz erfolgen. Bspw. kann die elektronische Recheneinrichtung 14 bei geladener/aktiver Projektierung überwachen, dass die attestierte Gerätekonfiguration 44 weiterhin unverändert vorliegt, insbesondere kann dies automatisch oder auch auf Anweisung der Projektierungseinrichtung 16 erfolgen. Die Projektierungseinrichtung 16 überwacht durch Prüfung wiederholend und jeweils aktuell die von der elektronischen Recheneinrichtung 14 gebildeten Geräteattestierungen 16, um zu überprüfen ob weiterhin die erwartete Gerätekonfiguration 44 vorliegt. Ferner kann die elektronische Recheneinrichtung 14 eine mechanische Verbindung, bspw. einen Stecker oder eine Buchse, mechanisch verriegeln, über die eine wechselbare Hardware-Komponente oder eine Verkabelung zu dieser verbunden ist. Dadurch ist eine Änderung der Gerätekonfiguration 44 verhindert oder zumindest erschwert. Die elektronische Recheneinrichtung 14 verriegelt dabei ferner eine Abdeckklappe bzw. einen Deckel oder ähnliches, die einen physischen Zugriff auf die Hardware-Komponenten verhindert. Ferner kann die elektronische Recheneinrichtung 14 und/oder die Projektierungseinrichtung 16 ein Schaltschrank oder ein Rack, in dem die elektronische Recheneinrichtung 14 installiert ist, verriegeln, um einen physischen Zugriff auf die Gerätekomponenten der elektronischen Recheneinrichtung 14 zu verhindern.

Weiterhin ist es möglich, dass bei einem technischen System 44 eine Mehrzahl oder eine Vielzahl von Recheneinheiten 14 vorgesehen ist. Dabei können mehrere oder alle der Recheneinheiten 14 jeweils eine Gerätekonfiguration 44 ermitteln, eine zugeordnete Geräteattestierung 46 bilden und der Projektierungseinrichtung 16 übermitteln. Die Projektierungseinrichtung 16 kann dann die mehreren Geräteattestierung 46 einzeln prüfen und weiterhin die Kombination der mehreren Geräteattestierung 46 prüfen. Wenn die Prüfungen mit einem positiven Prüfergebnis erfolgt, stellt die Projektierungseinrichtung 16 der Mehrzahl oder Vielzahl von Recheneinheiten 14 jeweils die der jeweiligen Recheneinrichtung 14 zugeordneten Projektierungsdaten 48 bereit.

## Patentansprüche

1. Verfahren zum Betreiben eines technischen Systems (129 mittels eines Automatisierungssystem (10), mit den Schritten:
- Identifizieren einer Gerätekonfiguration (44) des technischen Systems (12) mittels einer elektronischen Recheneinrichtung (14) des Automatisierungssystems (10);
- Erzeugen einer Geräteattestierung (46) in Abhängigkeit von der identifizierten Gerätekonfiguration (44) mittels der elektronischen Recheneinrichtung (14);
- Übermitteln der Geräteattestierung (46) an eine Projektierungseinrichtung (16) des Automatisierungssystems (10) zum Projektieren eines Projekts für das technische System (12) mittels der elektronischen Recheneinrichtung (14);
- Überprüfen der Geräteattestierung (46) in Abhängigkeit von dem durchzuführenden Projekt mittels der Projektierungseinrichtung (16); und
- Übermitteln von Projektierungsdaten (48) für das Projekt an die elektronische Recheneinrichtung (14) in Abhängigkeit von der Überprüfung mittels der Projektierungseinrichtung (16).

2. Verfahren nach Anspruch 1, **dadurch gekennzeichnet, dass** in Abhängigkeit von der Geräteattestierung (46) potentielle durchzuführenden Projekte ermittelt werden und die potentiell durchzuführenden Projekte zur Auswahl durch eine Person bereitgestellt werden.

3. Verfahren nach Anspruch 1 oder 2, **dadurch gekennzeichnet, dass**
nach dem Übermitteln der Projektierungsdaten (48) an die elektronischen Recheneinrichtung (14) eine Änderung der Gerätekonfiguration (44) am technischen System (12) gesperrt wird.

4. Verfahren nach Anspruch 3, **dadurch gekennzeichnet, dass** bei einer Änderung der Gerätekonfiguration (14) eine Warnmeldung erzeugt wird.

5. Verfahren nach Anspruch 3 oder 4, **dadurch gekennzeichnet, dass**
mittels der elektronischen Recheneinrichtung (14) während des Betriebs des technischen Systems (12) die Gerätekonfiguration (44) überwacht wird.

6. Verfahren nach einem der Ansprüche 3 bis 5, **dadurch gekennzeichnet, dass**
mittels der elektronischen Recheneinrichtung (14) eine mechanische Verbindung am technischen System (12) und/oder der elektronischen Recheneinrichtung (14) verriegelt und/oder blockiert wird.

7. Verfahren nach einem der vorhergehenden Ansprüche, **dadurch gekennzeichnet, dass**
die Geräteattestierung (46) kryptografisch geschützt erzeugt wird.

8. Verfahren nach einem der vorhergehenden Ansprüche, **dadurch gekennzeichnet, dass**
eine Gerätekomponente am technischen System (12) auf Basis eines gerätespezifischen Identifizierers der Gerätekomponente identifiziert wird.

9. Verfahren nach einem der vorhergehenden Ansprüche, **dadurch gekennzeichnet, dass**
eine Gerätekomponente auf Basis eines gerätekomponentenspezifischen Parameters der Gerätekomponente identifiziert wird.

10. Verfahren nach einem der vorhergehenden Ansprüche, **dadurch gekennzeichnet, dass**
die Projektierungsdaten (48) nur dann an die elektronische Recheneinrichtung (14) übertragen werden, wenn das Projekt mit der Gerätekonfiguration (44) kompatibel ist.

11. Verfahren nach einem der vorhergehenden Ansprüche, **dadurch gekennzeichnet, dass**
mittels der Projektierungseinrichtung (16) zum Überprüfen der Gerätekonfiguration (44) eine Simulation der Gerätekonfiguration (44) in Abhängigkeit von dem durchzuführenden Projekt durchgeführt wird.

12. Verfahren nach einem der vorhergehenden Ansprüche, **dadurch gekennzeichnet, dass**
mittels der Projektierungseinrichtung (16) zum Überprüfen der Gerätekonfiguration (44) eine Referenz-Gerätekonfiguration mit der Gerätekonfiguration (44) verglichen wird.

13. Computerprogrammprodukt mit Programmcodemitteln, welche eine elektronische Recheneinrichtung (14) dazu veranlassen, wenn die Programmcodemittel von der elektronischen Recheneinrichtung (14) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Automatisierungssystem (10) zum Betreiben eines technischen Systems (12), mit zumindest einer elektronischen Recheneinrichtung (14) und einer Projektierungseinrichtung (16), wobei das Automatisierungssystem (10) zum Durchführen eines Verfahrens nach einem der Ansprüche 1 bis 12 ausgebildet ist.
